(19) **Europäisches Patentamt** / **European Patent Office** / **Office européen des brevets**

(11) **EP 3 999 789 B1**

(12) **FASCICULE DE BREVET EUROPEEN**

(45) Date de publication et mention de la délivrance du brevet:
**26.07.2023 Bulletin 2023/30**

(21) Numéro de dépôt: **20742350.0**

(22) Date de dépôt: **16.06.2020**

(51) Classification Internationale des Brevets (IPC):
**F24S 25/13** (2018.01)    **F24S 25/70** (2018.01)
**F16B 43/00** (2006.01)    **F16B 7/18** (2006.01)
**F16B 2/00** (2006.01)    **F16B 39/282** (2006.01)
**F24S 25/00** (2018.01)

(52) Classification Coopérative des Brevets (CPC):
**F24S 25/13; F24S 25/70;** F16B 2/005;
F16B 39/282; F24S 2025/019; Y02E 10/47;
Y02E 10/50

(86) Numéro de dépôt international:
**PCT/FR2020/051036**

(87) Numéro de publication internationale:
**WO 2021/009425 (21.01.2021 Gazette 2021/03)**

(54) **TIRANT POUR STRUCTURE NOTAMMENT EN TREILLIS**

ZUGANKER, INSBESONDERE FÜR EINE GITTERSTRUKTUR

TIE ROD FOR AN IN PARTICULAR TRELLIS STRUCTURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.07.2019 FR 1907919**

(43) Date de publication de la demande:
**25.05.2022 Bulletin 2022/21**

(73) Titulaire: **Nexans**
**92400 Courbevoie (FR)**

(72) Inventeurs:
• **TORDO, Jérôme**
**13100 AIX-EN-PROVENCE (FR)**

• **VIENNOIS, Fabien**
**74140 MESSERY (FR)**

(74) Mandataire: **Ipsilon**
**Le Centralis**
**63, avenue du Général Leclerc**
**92340 Bourg-la-Reine (FR)**

(56) Documents cités:
EP-A1- 2 400 239    EP-A1- 3 428 356
EP-B1- 2 400 239    WO-A1-2018/033495
WO-A2-2011/162670    DE-A1-102013 225 453
DE-B3- 10 358 821    FR-A- 859 175

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

# Description

## Domaine technique

La présente invention concerne la fixation de tirants rigides sur des structures.

En particulier, l'invention concerne un tirant apte à être fixé en deux points de fixation d'une structure, le tirant comportant deux extrémités de fixation comprenant chacune une ouverture circulaire de fixation.

Un tel tirant est classiquement fixé à la structure en plaçant chaque ouverture circulaire de fixation en regard d'une ouverture correspondante au niveau du point de fixation sur la structure et assemblant chaque extrémité de fixation par un système de boulon dont la vis de fixation traverse les ouvertures placées en vis-à-vis.

## Arrière-plan technologique

Dans de nombreuses structures, en particulier des structures métalliques en treillis, des tirants sont utilisés afin de rigidifier l'ensemble.

Une telle utilisation de tirants est faite dans une structure en treillis décrite dans le document WO 2018/033495 au nom de la Demanderesse, la structure en treillis servant de structure de support d'une table d'un suiveur solaire.

Or, les éléments constituants la structure sur laquelle sont fixés les tirants sont fabriqués selon des tolérances de fabrication, faisant ainsi varier sensiblement la distance entre les points de fixation des tirants sur la structure.

La compensation de ces écarts de tolérance ne peut être faite en introduisant du jeu au niveau des points de fixation, le risque de flambage des tirants devenant élevé dans ces circonstances. Afin d'éviter le flambage des tirants, ces derniers doivent être fixés de préférence avec une légère pré-tension en traction.

Aujourd'hui, cette problématique est résolue avec un système de filetage / écrou en bout de tirant. Cependant cette solution s'avère coûteuse et nécessite un temps de montage important.

## Résumé de l'invention

La présente invention décrit un tirant dont les éléments permettant sa fixation sur une structure permettent de répondre aux problématiques de tolérance et de pré-tension précédemment citées, tout en proposant un coût de fabrication bas et un temps de montage réduit.

Plus particulièrement, la présente invention a pour premier objet un tirant apte à être fixé en deux points de fixation d'une structure au moyen de deux vis de fixation, ledit tirant comportant un corps longitudinal pourvu d'une première extrémité de fixation comprenant une première ouverture circulaire et d'une deuxième extrémité de fixation comprenant une deuxième ouverture circulaire, caractérisé en ce qu'il comporte une rondelle comprenant un corps d'enveloppe externe cylindrique et dotée d'un orifice traversant excentré, ladite rondelle étant reçue concentriquement dans la deuxième ouverture circulaire et mobile en rotation dans ladite deuxième ouverture circulaire de manière à modifier la position de l'orifice excentré pour faire varier une distance d'entraxe de fixation entre ledit orifice excentré et la première ouverture circulaire.

Selon d'autres caractéristiques avantageuses et non limitatives du tirant conforme à l'invention :

- ledit corps d'enveloppe externe cylindrique peut être prolongé par une collerette d'appui, dont une surface intérieure d'appui est adaptée pour venir en appui contre une surface plane de la deuxième extrémité de fixation du tirant.;
- ladite collerette d'appui peut former une tête polygonale de la rondelle ;
- la surface intérieure d'appui de ladite collerette d'appui comporte de préférence une zone structurée de façon à augmenter le coefficient de frottement du contact entre ladite surface intérieure d'appui et la surface plane de la deuxième extrémité de fixation du tirant ;
- ladite zone structurée est par exemple formée par des picots saillants dans la direction axiale de la rondelle ou par des stries disposées de manière radiale autour de l'axe de la rondelle ;
- en variante, la surface intérieure d'appui de ladite collerette d'appui peut comporter un revêtement en un matériau de type colle de façon à augmenter le coefficient de frottement du contact entre ladite surface intérieure d'appui et la surface plane de la deuxième extrémité de fixation du tirant ;
- la deuxième ouverture circulaire a un diamètre supérieur au diamètre de la première ouverture circulaire ;
- l'orifice excentré a un diamètre sensiblement égal au diamètre de la première ouverture circulaire.

L'invention a également pour objet un procédé de montage du tirant précédent sur une structure, caractérisé en ce qu'il comprend :

- une étape de fixation de la première extrémité de fixation du tirant en un premier point de fixation de la structure, au moyen d'une première vis de fixation passant au travers de la première ouverture circulaire du tirant et d'une première ouverture de la structure en vis-à-vis de ladite première ouverture circulaire ;
- une étape de positionnement de la deuxième extrémité de fixation du tirant sensiblement en vis-à-vis d'une deuxième ouverture située en un deuxième point de fixation de la structure par pivotement du tirant autour de l'axe de la première vis de fixation ;
- une étape d'ajustement de la position de l'orifice excentré de la rondelle, par rotation de la rondelle dans la deuxième ouverture circulaire et pivotement du tirant autour de l'axe de la première vis de fixation, afin de positionner l'orifice excentré en regard de la deuxième ouverture ;

- une étape de fixation de la deuxième extrémité de fixation du tirant audit deuxième point de fixation de la structure, au moyen d'une deuxième vis de fixation passant au travers de l'orifice excentré de la rondelle et de ladite deuxième ouverture.

Selon d'autres caractéristiques avantageuses et non limitatives du procédé conforme à l'invention :

- la deuxième vis de fixation est de préférence serrée avec un couple de serrage suffisant pour s'opposer à une rotation de la rondelle si le tirant est soumis à un effort longitudinal de traction.
- préalablement au serrage, on peut appliquer un couple sur la rondelle afin de mettre une légère tension dans le tirant.

L'invention a en outre pour objet une structure en treillis comportant des longerons s'étendant parallèlement entre eux selon une direction principale d'extension, des traverses réparties le long de la direction principale d'extension pour relier mécaniquement les longerons deux à deux, et une pluralité de tirants reliant deux longerons adjacents et deux traverses consécutives, ladite structure en treillis étant caractérisée en ce qu'au moins un tirant de la pluralité de tirants est un tirant selon le premier objet de l'invention.

L'invention a en outre pour objet un suiveur solaire comprenant:

- un dispositif mobile comprenant une table équipée d'au moins un dispositif de collecte d'énergie solaire, une structure de support s'étendant longitudinalement sur une longueur L pour supporter ladite table, un premier arceau de support et un deuxième arceau de support configurés pour supporter ladite structure de support ;
- un premier appui au sol et un deuxième appui au sol configurés pour supporter respectivement le premier arceau de support et le deuxième arceau de support; et
- un dispositif d'entraînement cinématique configuré pour entraîner en rotation le dispositif mobile par rapport au premier appui au sol et au deuxième appui au sol ;

le suiveur solaire étant caractérisé en ce que ladite structure de support est une structure en treillis selon l'invention.

**Brève description des figures**

La description qui va suivre en regard des dessins annexés, donnés à titre d'exemples non limitatifs, fera bien comprendre en quoi consiste l'invention et comment elle peut être réalisée. Sur les figures annexées :

[fig. 1] La figure 1 illustre certains éléments d'un dispositif mobile d'un suiveur solaire, montrant notamment une structure connue de support en treillis;

[fig. 2] La figure 2 illustre partiellement une vue de côté de la structure de support en treillis de la figure 1;

[fig. 3] La figure 3 illustre trois vues (a) (b) et (c) d'un tirant selon un mode de réalisation possible de l'invention, respectivement sans et avec la rondelle de fixation à orifice excentré selon deux positions différentes de la rondelle ;

[fig. 4] La figure 4 illustre une vue (a) de trois quart et une vue (b) de dessous d'un mode de réalisation possible d'une rondelle de fixation à orifice excentré équipant le tirant de la figure 3, conformément à l'invention ;

[fig. 5] La figure 5 illustre différentes étapes d'un procédé de montage d'un tirant en deux points d'une structure selon l'invention ;

[fig. 6] La figure 6 est une vue de côté d'une extrémité du tirant une fois assemblé à la structure.

**Description de mode(s) de réalisation**

Sur les figures annexées, les éléments identiques ou équivalents porteront les mêmes signes de référence.

Dans la suite, l'invention va être décrite dans le cadre non limitatif de l'utilisation de tirants pour des structures en treillis utilisées dans les suiveurs solaires. Bien entendu, le principe de la fixation ajustable d'un tirant qui va être détaillé ci-après peut être appliqué à toute structure comportant au moins un tirant fixé à ses deux extrémités à la structure.

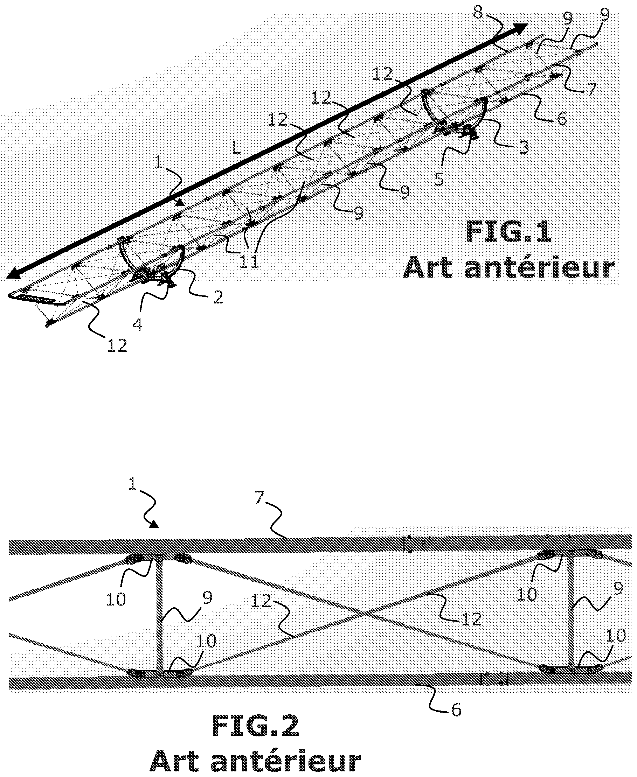

Les figures 1 et 2 représentent certains composants d'un suiveur solaire connu en particulier du document WO 2018/033495. Ce suiveur solaire comprend essentiellement :

- un dispositif mobile comportant une table (non représentée) équipée d'au moins un dispositif de collecte d'énergie solaire, par exemple un panneau photovoltaïque, une structure de support 1 qui s'étend longitudinalement sur une longueur L pour supporter la table, un premier arceau de support 2 et un deuxième arceau de support 3 configurés pour supporter la structure de support 1;
- un premier appui au sol 4 et un deuxième appui au sol 5 configurés pour supporter respectivement le premier arceau de support 2 et le deuxième arceau de support 3.

Dans le mode de réalisation non limitatif représenté, le premier arceau de support 2 et le deuxième arceau de support 3 sont disposés à une certaine distance par rapport aux extrémités de la structure de support 1. La structure de support 1 se trouve ainsi disposée en porte-à-faux sur le premier appui au sol 4 via le premier arceau de support 2 et sur le deuxième appui au sol 5 via le deuxième arceau de support 3, ce qui permet une répartition avantageuse des contraintes mécaniques supportées par la structure de support 1, permettant une réduction du poids et des déformations (flèche) du dispositif mobile tout en conservant une résistance mécanique élevée.

La structure de support 1 est une structure en treillis comportant des longerons s'étendant parallèlement entre eux selon une direction principale d'extension, et des traverses réparties le long de la direction principale d'extension pour relier mécaniquement les longerons deux à deux.

Dans l'exemple non limitatif représenté sur les figures 1 et 2, la structure en treillis comporte trois longerons 6, 7 et 8 qui s'étendent parallèlement entre eux selon la direction principale d'extension, ainsi qu'un grand nombre de traverses.

Chacune des deux extrémités de chaque traverse 9 est reliée à l'un des trois longerons 6, 7 ou 8 par l'intermédiaire d'une platine 10 fixée à ce longeron.

Comme visible plus particulièrement sur la figure 1, les traverses 9 peuvent être disposées relativement aux trois longerons 6, 7 et 8 de façon à former une pluralité de triangles 11 parallèles entre eux et contenus chacun dans un plan perpendiculaire à la direction principale d'extension. Les triangles peuvent être régulièrement répartis le long de la direction principale d'extension. En variante, on peut prévoir d'augmenter localement la densité des triangles dans les zones de la structure pour lesquelles on souhaite augmenter la résistance mécanique, par exemple au niveau de l'un et/ou l'autre du premier et deuxième arceau de support 2 et 3.

La structure de support 1 comprend également des tirants 12. Ces tirants 12 sont disposés de sorte à relier deux triangles 11 deux à deux. Par exemple, comme visible sur la figure 2, deux tirants 12 relient deux triangles consécutifs par leurs extrémités reliées d'une part, pour chaque tirant 12, au niveau d'une platine 10 correspondante fixée au longeron 7 et d'autre part, au niveau d'une autre platine correspondante 10 fixée au longeron 6. Les tirants 12 peuvent être avantageusement contraints en tension de manière à accroître la résistance mécanique de la structure de support 1. Comme visible sur la figure 1, la structure peut comporter un nombre important de tirants 12, chaque tirant reliant deux sommets de deux triangles 11 consécutifs.

Comme indiqué en introduction, une problématique fréquemment rencontrée lors du montage de structures comme présentées ci-dessus est la variation des dimensions des différents éléments structurels. En effet, ces variations, dues aux tolérances de fabrication, doivent être compensées habituellement avec du jeu au niveau des fixations. Un tirant dont au moins une extrémité de fixation porte une rondelle excentrique selon l'invention permet de répondre à ce problème en permettant un ajustement de la distance entre les points de fixation sur le tirant, proposant ainsi un réglage sans jeu malgré des variations de dimensions des éléments structurels.

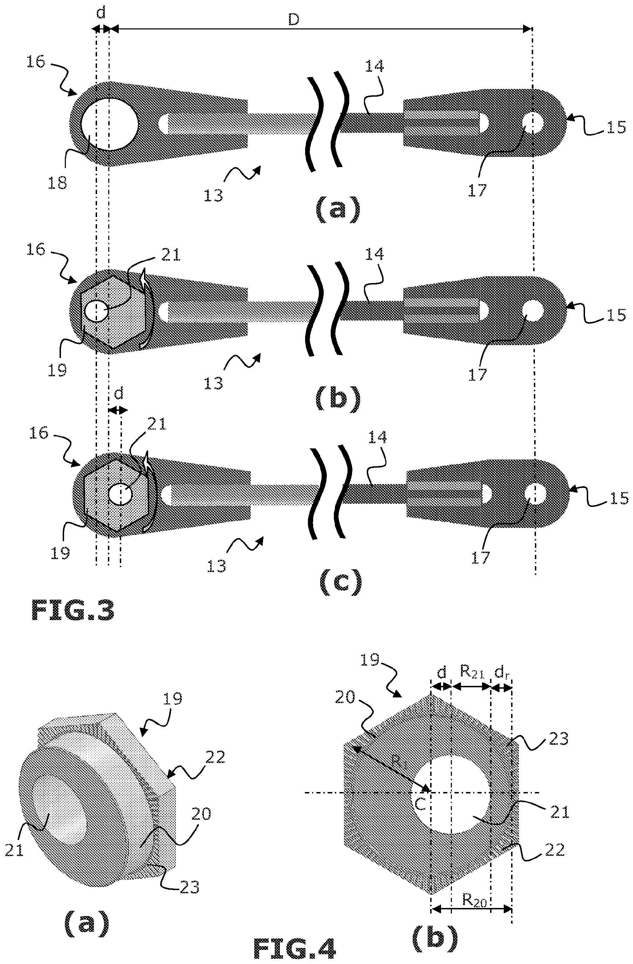

La figure 3 représente un tirant 13 selon un mode de réalisation possible de l'invention, ce tirant pouvant notamment être utilisé en lieu et place de n'importe quel des tirants 12 de la structure en treillis 1 des figures 1 et 2 décrites ci-avant. La figure 3 illustre plus précisément une première vue (a) correspondant au tirant sans la rondelle excentrique, une deuxième vue (b) correspondant au tirant avec la rondelle excentrique dans une première position angulaire, et une troisième vue (c) correspondant au tirant avec la rondelle excentrique dans une deuxième position angulaire opposée de 180 degrés par rapport à la première position angulaire.

Le tirant 13 comprend un corps longitudinal 14, par exemple un corps métallique de section circulaire, pourvu de deux extrémités de fixation 15 et 16, permettant au tirant d'être fixé en deux points de fixation d'une structure.

Chaque extrémité de fixation 15, 16 comprend classiquement une ouverture circulaire, respectivement 17 et 18. Dans l'exemple non limitatif représenté sur les figures, chaque extrémité de fixation 15, 16 est formée par un embout aplati fixé à une extrémité du corps longitudinal 14 du tirant 13, et percé de l'ouverture circulaire traversante correspondante 17 ou 18. La fixation de l'embout peut se faire de n'importe quelle manière possible, et en particulier par soudage ou brasage. Alternativement, les embouts peuvent être intégrés au corps 14 du tirant 13. Les embouts aplatis formant les deux extrémités de fixation 15, 16 s'étendent dans un même plan et sont percés pour former les ouvertures circulaires traversantes 17 et 18.

Le diamètre de l'ouverture circulaire 17 est choisi de manière à pouvoir recevoir axialement un organe d'assemblage, par exemple, de manière classique, la tige de vis d'un boulon.

Le diamètre de l'ouverture circulaire 18 est supérieur au diamètre de l'ouverture circulaire 17, pour pouvoir accueillir concentriquement une rondelle excentrique 19, comme cela sera expliqué par la suite.

Dans un tirant classique, la distance D séparant les centres des ouvertures circulaires traversantes 17 et 18 fixe la valeur de la distance d'entraxe de fixation du tirant.

De manière différente, et conformément à l'invention, la distance d'entraxe de fixation du tirant 13 est rendue ajustable, grâce à l'utilisation d'une rondelle particulière 19 reçue concentriquement dans l'ouverture circulaire traversante 18 (figure 3 (b)).

La figure 4 représente deux vues d'un exemple de réalisation d'une telle rondelle 19, à savoir une vue (a) de trois quart et une vue (b) de dessous. La rondelle est représentée seule, avant montage dans l'ouverture circulaire 18 de l'extrémité de fixation 16 du tirant de la figure 3(a).

La rondelle 19 est formée d'un corps d'enveloppe externe cylindrique 20 percée d'un orifice circulaire traversant 21 de rayon $R_{21}$. De préférence, l'orifice traversant 21 a le même diamètre que l'ouverture circulaire 17 prévue sur l'autre extrémité 15 du tirant, ce diamètre devant être suffisant pour recevoir axialement une vis de fixation. Ceci permet avantageusement d'utiliser les mêmes vis de fixation pour chacune des deux extrémités du tirant. Ce diamètre est de préférence légèrement supérieur au diamètre extérieur de la vis de fixation (selon des dimensionnements connus de la technique), ceci afin de garantir une fixation sans jeu. Le rayon $R_{20}$ de l'enveloppe externe cylindrique 20 est déterminé de préférence par la relation suivante :

[Math. 1]
$$R_{20} = d + R_{21} + d_r$$

dans laquelle $d_r$ correspond à une réserve de matière suffisante qui assure la tenue mécanique de la dite rondelle excentrique.

Comme plus particulièrement visible notamment sur la figure 3(b) et la figure 4(b), l'orifice traversant 21 est excentré d'une distance d par rapport au centre C de l'enveloppe externe cylindrique 20, contrairement à une rondelle classique, dont l'orifice serait central. La distance d est par exemple égale à 4 millimètres. Le corps d'enveloppe externe cylindrique 20 possède une hauteur suffisante pour permettre le maintien de la rondelle 19 dans l'ouverture circulaire 18, cette hauteur étant de préférence au maximum égale à l'épaisseur de l'embout aplati formant l'extrémité de fixation 16 du tirant 13.

Le corps d'enveloppe cylindrique 20 de la rondelle 19 est prolongé axialement par une collerette d'appui 22. L'orifice excentré 21 traverse également axialement la collerette d'appui 22.

La surface de la collerette 22 orientée en regard du corps d'enveloppe cylindrique 20 forme une surface intérieure d'appui 23 de la rondelle 19, adaptée pour venir en appui contre la surface plane de l'embout aplati sur la deuxième extrémité de fixation 16 du tirant 13 lorsque la rondelle 19 est reçue dans l'ouverture circulaire 18. La surface intérieure d'appui 23 présente de préférence une zone structurée de façon à augmenter le coefficient de frottement du contact entre la surface intérieure d'appui et la surface plane de la deuxième extrémité de fixation 16 du tirant pour des raisons qui seront explicitées ultérieurement. Cette zone structurée peut être réalisée par enlèvement de matière ou par ajout de matière. De manière préférentielle, comme illustré sur les figures, la zone texturée est formée par des stries disposées sur la surface intérieure d'appui 23 de manière radiale autour de l'axe de la rondelle 19, augmentant en particulier le coefficient de frottement en direction tangentielle. Alternativement, la zone texturée peut être formée par des picots saillants dans la direction axiale de la rondelle 9, disposés de manière homogène ou groupée sur la surface intérieure d'appui 13. Ainsi, il est également possible de former des stries radiales à l'aide de picots saillants. A la place ou en complément d'une zone structurée, il est également possible d'augmenter le coefficient de frottement par l'ajout d'un matériau supplémentaire de type colle, en revêtement par exemple sur la surface intérieure d'appui 23.

La collerette d'appui 22 peut être de forme polygonale afin de simplifier la manipulation de la rondelle à l'aide d'un outil. De manière préférentielle, la collerette d'appui 22 est de forme hexagonale, comme illustré sur les figures, afin de pouvoir être saisie par une clé de serrage classique.

Le diamètre externe de l'enveloppe cylindrique 20 de la rondelle 19 est adapté pour permettre à cette rondelle d'être mobile en rotation dans l'ouverture circulaire 18, comme indiqué par une flèche sur la figure 3(b). La rotation de l'enveloppe cylindrique 20 autour de son axe passant par le centre de l'ouverture 18 a pour effet de déplacer le centre de l'orifice excentré 21 sur un cercle de rayon d autour du centre de l'ouverture 18 du tirant 13. Ainsi, en modifiant la position de l'orifice excentré 21, on peut faire faire varier la distance d'entraxe de fixation du tirant, qui correspond ici à la distance entre l'orifice excentré 21 et la première ouverture circulaire 17. Plus précisément, la distance d'entraxe de fixation peut prendre toute valeur entre D-d (position angulaire de la rondelle montrée sur la figure 3(c)) et D+d (position angulaire de la rondelle montrée sur la figure 3(b)), selon l'angle de rotation imprimé à la rondelle 19. Cette distance d'entraxe variable permet donc de compenser certaines tolérances de fabrication.

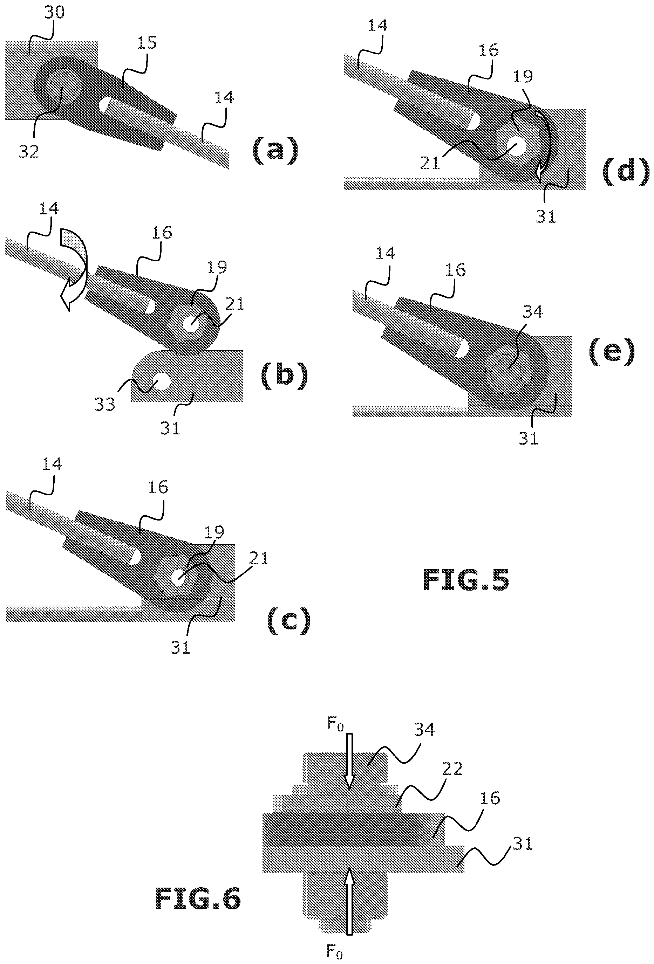

Des étapes mises en oeuvre pour le montage et la fixation du tirant 13 en deux points de fixation situés respectivement sur deux zones de fixation 30 et 31 d'une structure vont à présent être détaillées en référence à la figure 5. La structure considérée est par exemple la structure en treillis décrite ci-avant en référence à la figure 2. Dans ce cas, les zones de fixation 30 et 31 sont deux zones de deux platines 10 fixées aux longerons 6 et 7.

Chaque vue (a) à (e) de la figure 5 illustre une vue rapprochée montrant uniquement l'une des extrémités de fixation 15 ou 16 du tirant et de la zone de fixation associée 30 ou 31 de la structure.

La première extrémité de fixation 15 du tirant est tout d'abord fixée avec jeu à un premier point de fixation sur la zone 30 de la structure comme illustrée sur la vue (a) de la figure 5. Cette étape de fixation est réalisée classiquement en plaçant l'ouverture circulaire 17 (figure 3) de la première extrémité de fixation 15 en vis-à-vis d'une première ouverture traversante correspondante (non visible) au niveau du premier point de fixation. L'assemblage est alors réalisé par l'intermédiaire d'une première vis de fixation 32 d'un boulon passant au travers des deux ouvertures en vis-à-vis. La première vis de fixation 32 est provisoirement boulonnée sans serrage de manière à autoriser le tirant à pivoter autour de l'axe de la première vis de fixation 32.

Par suite, dans une étape de positionnement schématisée par les vues (b) et (c) de la figure 5, le tirant est pivoté autour de l'axe de la première vis de fixation 32 jusqu'à ce que la deuxième extrémité de fixation 16 du tirant se retrouve en regard d'une deuxième ouverture traversante 33 au niveau du deuxième point de fixation situé sur la zone de fixation 31 de la structure. Dans la position montrée sur la vue (c) de la figure 5, la rondelle 19 est positionnée en vis-à-vis de l'ouverture 33 de la structure, cependant l'orifice excentré 21 et l'ouverture 33 ne sont pas forcément concentriques. En effet, la rondelle a été introduite dans une position arbitraire sur le tirant avant montage, ce qui ne correspond généralement pas à une distance d'entraxe correspondant à la distance séparant les deux points de fixation de la structure, qui de plus varie à cause des tolérances de fabrication.

Dans ce cas, on ajuste la position de l'orifice excentré 21 de manière à ce qu'il soit correctement positionné en regard de l'ouverture 17 de la structure (vue (d) de la figure 5). Cette opération d'ajustement est réalisée essentiellement par rotation de la rondelle 19 et léger pivotement du tirant autour de l'axe de la première vis de fixation 32. Ainsi, la distance d'entraxe correspondant exactement à la distance entre les ouvertures de la structure peut être ajustée, permettant de compenser les tolérances de fabrication des éléments de la structure.

Une deuxième vis de fixation 34 d'un boulon d'assemblage est alors insérée au travers de l'orifice excentré 21 et de l'ouverture 17 de la structure (Figure 5 (e)).

Selon une première possibilité de montage, la première vis de fixation 32 et la deuxième vis de fixation 34 sont alors serrées fermement afin d'obtenir un tirant monté sur la structure, mais sans mise en pré-tension.

De préférence néanmoins et selon une deuxième possibilité de montage, on applique un couple sur la rondelle excentrique afin de mettre une légère tension dans le tirant de façon à supprimer tous les jeux dans les liaisons entre les platines, les vis et le tirant. Puis on applique un couple de serrage suffisant dans la vis 34 afin de mettre une tension $F_0$ dans l'assemblage (voir figure 6).

En effet, si le tirant est soumis à un effort de traction F le long de son corps longitudinal 14, un couple C2 est appliqué sur la rondelle, la valeur maximale de ce couple étant fonction de l'effort de traction F et de la distance d selon la relation :

[Math. 2]

$$C2_{max} = F \times d$$

Il est nécessaire ainsi de s'opposer à ce couple C2 afin de garantir que la rondelle ne tourne pas. Pour ce faire, la valeur du couple de serrage C1 doit être choisie supérieure à la valeur du couple C2. En d'autres termes, la deuxième vis de fixation 34 est serrée avec un couple de serrage C1 suffisant pour s'opposer à une rotation de la rondelle si le tirant est soumis à un effort longitudinal de traction F. La valeur du couple C1 étant déterminée par la relation suivante :

[Math. 3]

$$C1 = R_1 \times F_0 \times tan\varphi$$

dans laquelle $R_1$ est la distance où s'applique la force de frottement de $F_0$, et $tan\varphi$ est le coefficient de frottement entre les matériaux. La distance $R_1$, représentée sur la figure 4(b), est avantageusement comprise entre le rayon cylindrique $R_{20}$ de l'enveloppe 20 l'extrémité et le plat de la forme hexagonale 22 de la rondelle.

L'effet anti-rotation est bien entendu amélioré par l'utilisation des stries ou picots au niveau de la surface intérieure d'appui 23 de la rondelle 19, et/ou par un revêtement en un matériau de type colle.

Grâce à l'invention, une unique pièce mobile constituée par la rondelle excentrique permet d'assurer les deux fonctions de rattrapage de jeu et de fixation du tirant. La solution est ainsi très simple à mettre en oeuvre, avec une modification minimale de la conception des tirants utilisés jusqu'à présent. Le réglage lors du montage d'un tirant selon l'invention sur une structure est en outre très rapide en comparaison avec des systèmes de réglage connu par filetage en extrémité de tirant.

## Revendications

1. Tirant (13) apte à être fixé en deux points de fixation d'une structure au moyen de deux vis de fixation, ledit tirant (13) comportant un corps longitudinal (14) pourvu d'une première extrémité de fixation (15) comprenant une première ouverture circulaire (17) et d'une deuxième extrémité de fixation (16) comprenant une deuxième ouverture circulaire (18), **caractérisé en ce qu'**il comporte une rondelle (19) comprenant un corps d'enveloppe externe cylindrique (20) et dotée d'un orifice traversant excentré (21), ladite rondelle (19) étant reçue concentriquement dans la deuxième ouverture circulaire (18) et mobile en rotation dans ladite deuxième ouverture circulaire (18) de manière à modifier la position de l'orifice excentré (21) pour faire varier une distance d'entraxe de fixation entre ledit orifice excentré (21) et la première ouverture circulaire (17).

2. Tirant (13) selon la revendication 1, **caractérisé en ce que** ledit corps d'enveloppe externe cylindrique (20) est prolongé par une collerette d'appui (22), dont une surface intérieure d'appui (23) est adaptée pour venir en appui contre une surface plane de la deuxième extrémité de fixation (16) du tirant (13).

3. Tirant (13) selon la revendication 2, **caractérisé en ce que** ladite collerette d'appui (12) forme une tête polygonale de la rondelle (19).

4. Tirant (13) selon la revendication 2 ou 3, **caractérisé en ce que** la surface intérieure d'appui (23) de ladite collerette d'appui (22) comporte une zone structurée de façon à augmenter le coefficient de frottement du contact entre ladite surface intérieure d'appui et la surface plane de la deuxième extrémité de fixation (16) du tirant (13).

5. Tirant (13) selon la revendication 4, **caractérisé en ce que** ladite zone structurée est formée par des picots saillants dans la direction axiale de la rondelle.

6. Tirant (13) selon la revendication 4, **caractérisé en ce que** ladite zone structurée est formée par des stries disposées de manière radiale autour de l'axe de la rondelle.

7. Tirant (13) selon la revendication 2 ou 3, **caractérisé en ce que** la surface intérieure d'appui (23) de ladite collerette d'appui (22) comporte un revêtement en un matériau de type colle de façon à augmenter le coefficient de frottement du contact entre ladite surface intérieure d'appui et la surface plane de la deuxième extrémité de fixation (16) du tirant (13).

8. Tirant (13) selon l'une quelconque des revendications précédentes, **caractérisé en ce que** la deuxième ouverture circulaire (18) a un diamètre supérieur au diamètre de la première ouverture circulaire (17).

9. Tirant (13) selon l'une quelconque des revendications précédentes, **caractérisé en ce que** l'orifice excentré (21) a un diamètre sensiblement égal au diamètre de la première ouverture circulaire (17).

10. Procédé de montage du tirant (13) selon l'une des revendications 1 à 9 sur une structure, **caractérisé en ce qu'**il comprend :

- une étape de fixation de la première extrémité de fixation (15) du tirant (13) en un premier point de fixation de la structure (30), au moyen d'une première vis de fixation (32) passant au travers de la première ouverture circulaire (17) du tirant et d'une première ouverture de la structure en vis-à-vis de ladite première ouverture circulaire (17) ;
- une étape de positionnement de la deuxième extrémité de fixation (16) du tirant (13) sensiblement en vis-à-vis d'une deuxième ouverture (33) située en un deuxième point de fixation de la structure (31) par pivotement du tirant (13) autour de l'axe de la première vis de fixation (32) ;
- une étape d'ajustement de la position de l'orifice excentré (21) de la rondelle (19), par rotation de la rondelle dans la deuxième ouverture circulaire (18) et pivotement du tirant (13) autour de l'axe de la première vis de fixation (32), afin de positionner l'orifice excentré (21) en regard de la deuxième ouverture (33);
- une étape de fixation de la deuxième extrémité de fixation (16) du tirant (13) audit deuxième point de fixation de la structure, au moyen d'une deuxième vis de fixation (34) passant au travers de l'orifice excentré (21) de la rondelle (19) et de ladite deuxième ouverture (33).

11. Procédé de montage selon la revendication 10, **caractérisé en ce que** la deuxième vis de fixation (34) est serrée avec un couple de serrage suffisant pour s'opposer à une rotation de la rondelle si le tirant est soumis à un effort longitudinal de traction.

12. Procédé de montage selon la revendication 11, **caractérisé en ce que**, préalablement au serrage, on applique un couple sur la rondelle (19) afin de mettre une légère tension dans le tirant.

13. Structure (1) en treillis comportant des longerons (6, 7, 8) s'étendant parallèlement entre eux selon une direction principale d'extension, des traverses (9) réparties le long de la direction principale d'extension pour relier mécaniquement les longerons (6, 7, 8) deux à deux, et une pluralité de tirants (12) reliant deux longerons adjacents et deux traverses consécutives, ladite structure (1) en treillis étant **caractérisée en ce qu'**au moins un tirant de la pluralité de tirants est un tirant (13) selon l'une quelconque des revendications 1 à 9.

14. Suiveur solaire comprenant:

- un dispositif mobile comprenant une table équipée d'au moins un dispositif de collecte d'énergie solaire, une structure de support s'étendant longitudinalement sur une longueur L pour supporter ladite table, un premier arceau de support (2) et un deuxième arceau de support (3) configurés pour supporter ladite structure de support ;
- un premier appui au sol (4) et un deuxième appui au sol (5) configurés pour supporter respectivement le premier arceau de support (2) et le deuxième arceau de support (3) ; et
- un dispositif d'entraînement cinématique configuré pour entraîner en rotation le dispositif mobile par rapport au premier appui au sol (4) et au deuxième appui au sol (5) ;

le suiveur solaire étant **caractérisé en ce que** ladite structure de support est une structure (1) en treillis selon la revendication 13.

**Patentansprüche**

1. Zuganker (13), der imstande ist, an zwei Befestigungspunkten einer Struktur mit Hilfe von zwei Befestigungsschrauben befestigt zu sein, wobei der Zuganker (13) einen länglichen Körper (14) umfasst, der mit einem ersten Befestigungsende (15) versehen ist, das eine erste runde Öffnung (17) umfasst, und einem zweiten Befestigungsende (16), das eine zweite runde Öffnung (18) umfasst, **dadurch gekennzeichnet, dass** er eine Scheibe (19) aufweist, die einen äußeren zylindrischen Mantelkörper (20) umfasst und mit einem dezentrierten Durchgangsloch (21) versehen ist, wobei die Scheibe (19) in der zweiten runden Öffnung (18) konzentrisch aufgenommen ist und in der zweiten runden Öffnung (18) derart rotationsbeweglich ist, dass die Position des dezentrierten Lochs (21) verändert wird, um einen Befestigungsmittenabstand zwischen dem dezentrierten Loch (21) und der ersten runden Öffnung (17) zu variieren.

2. Zuganker (13) nach Anspruch 1, **dadurch gekennzeichnet, dass** der äußere zylindrische Mantelkörper (20) von einem Stützflansch (22) verlängert wird, von dem eine innere Stützfläche (23) geeignet ist, sich auf einer ebenen Fläche des zweiten Befestigungsendes (16) des Zugankers (13) abzustützen.

3. Zuganker (13) nach Anspruch 2, **dadurch gekennzeichnet, dass** der Stützflansch (12) einen polygonalen Kopf der Scheibe (19) bildet.

4. Zuganker (13) nach Anspruch 2 oder 3, **dadurch gekennzeichnet, dass** die innere Stützfläche (23) des Stützflanschs (22) eine derart strukturierte Zone aufweist, dass der Reibungskoeffizient des Kontakts zwischen der inneren Stützfläche und der ebenen Fläche des zweiten Befestigungsendes (16) des Zugankers (13) erhöht wird.

5. Zuganker (13) nach Anspruch 4, **dadurch gekennzeichnet, dass** die strukturierte Zone von Spitzen gebildet ist, die in axialer Richtung der Scheibe hervorstehen.

6. Zuganker (13) nach Anspruch 4, **dadurch gekennzeichnet, dass** die strukturierte Zone von Rippen gebildet ist, die radial um die Achse der Scheibe angeordnet sind.

7. Zuganker (13) nach Anspruch 2 oder 3, **dadurch gekennzeichnet, dass** die innere Stützfläche (23) des Stützflanschs (22) eine Beschichtung aus einem Material vom Typ Kleber aufweist, um den Reibungskoeffizienten des Kontakts zwischen der inneren Stützfläche und der ebenen Fläche des zweiten Befestigungsendes (16) des Zugankers (13) zu erhöhen.

8. Zuganker (13) nach einem der vorangehenden Ansprüche, **dadurch gekennzeichnet, dass** die zweite runde Öffnung (18) einen Durchmesser hat, der größer als der Durchmesser der ersten runden Öffnung (17) ist.

9. Zuganker (13) nach einem der vorangehenden Ansprüche, **dadurch gekennzeichnet, dass** das dezentrierte Loch (21) einen Durchmesser hat, der etwa gleich dem Durchmesser der ersten runden Öffnung (17) ist.

10. Verfahren zur Montage des Zugankers (13) nach einem der Ansprüche 1 bis 9 auf einer Struktur, **dadurch gekennzeichnet, dass** es umfasst:

    - einen Befestigungsschritt des ersten Befestigungsendes (15) des Zugankers (13) an einem ersten Befestigungspunkt der Struktur (30) mit Hilfe einer ersten Befestigungsschraube (32), die durch die erste runde Öffnung (17) des Zugankers und eine erste Öffnung der Struktur gegenüber der ersten runden Öffnung (17) verläuft;
    - einen Positionierungsschritt des zweiten Befestigungsendes (16) des Zugankers (13) etwa gegenüber einer zweiten Öffnung (33), die sich an einem zweiten Befestigungspunkt der Struktur (31) befindet, durch Schwenken des Zugankers (13) um die Achse der ersten Befestigungsschraube (32);
    - einen Korrekturschritt der Position des dezentrierten Lochs (21) der Scheibe (19) durch Rotation der Scheibe in der zweiten runden Öffnung (18) und Schwenken des Zugankers (13) um die Achse der ersten Befestigungsschraube (32), um das dezentrierte Loch (21) der zweiten Öffnung (33) zugewandt zu positionieren;
    - einen Befestigungsschritt des zweiten Befestigungsendes (16) des Zugankers (13) am zweiten Befestigungspunkt der Struktur mit Hilfe einer zweiten Befestigungsschraube (34), die durch das dezentrierte Loch (21) der Scheibe (19) und die zweite Öffnung (33) verläuft.

11. Montageverfahren nach Anspruch 10, **dadurch gekennzeichnet, dass** die zweite Befestigungsschraube (34) mit einem Spannmoment festgezogen wird, das ausreichend ist, um sich einer Rotation der Scheibe zu widersetzen, wenn der Zuganker einer länglichen Zugkraft ausgesetzt wird.

12. Montageverfahren nach Anspruch 11, **dadurch gekennzeichnet, dass** vor dem Festziehen eine Kraft auf die Scheibe (19) ausgeübt wird, um auf den Zuganker einen leichten Zug auszuüben.

13. Gitterstruktur (1), die Längsträger (6, 7, 8) aufweist, die sich parallel zueinander in einer Haupterstreckungsrichtung erstrecken, Querträger (9), die entlang der Haupterstreckungsrichtung verteilt sind, um die Längsträger (6, 7, 8) paarweise mechanisch miteinander zu verbinden, und eine Vielzahl von Zugankern (12), die zwei benachbarte Längsträger und zwei aufeinanderfolgende Querträger verbinden, wobei die Gitterstruktur (1) **dadurch gekennzeichnet ist, dass** mindestens ein Zuganker von der Vielzahl von Zugankern ein Zuganker (13) nach einem der Ansprüche 1 bis 9 ist.

14. Solartracker, umfassend:

- eine bewegliche Vorrichtung, die einen Tisch umfasst, der mit mindestens einer Solarenergiesammelvorrichtung ausgestattet ist, wobei sich eine tragende Struktur längs über eine Länge L erstreckt, um den Tisch zu tragen, wobei ein erster Stützbogen (2) und ein zweiter Stützbogen (3) zum Stützen der tragenden Struktur ausgelegt sind;
- eine erste Abstützung auf dem Boden (4) und eine zweite Abstützung auf dem Boden (5), die dazu ausgelegt sind, jeweils den ersten Stützbogen (2) und den zweiten Stützbogen (3) zu tragen; und
- eine kinematische Antriebsvorrichtung, die dazu ausgelegt ist, die bewegliche Vorrichtung im Verhältnis zur ersten Abstützung auf dem Boden (4) und zur zweiten Abstützung auf dem Boden (5) rotatorisch anzutreiben;

wobei der Solartracker **dadurch gekennzeichnet ist, dass** die tragende Struktur eine Gitterstruktur (1) nach Anspruch 13 ist.

## Claims

1. A tie rod (13) capable of being fastened at two fastening points of a structure by means of two fastening screws, said tie rod (13) comprising a longitudinal body (14) provided with a first fastening end (15) comprising a first circular opening (17) and a second fastening end (16) comprising a second circular opening (18), **characterized in that** it has a washer (19) comprising a cylindrical external envelope body (20) and provided with an off-center through orifice (21), said washer (19) being received concentrically in the second circular opening (18) and being movable in rotation in said second circular opening (18) so as to modify the position of the off-center orifice (21) in order to vary an interaxial fastening distance between said off-center orifice (21) and the first circular opening (17).

2. The tie rod (13) according to claim 1, **characterized in that** said cylindrical external envelope body (20) is extended by a bearing collar (22), an inner bearing surface (23) of which is adapted to come to bear against a planar surface of the second fastening end (16) of the tie rod (13).

3. The tie rod (13) according to claim 2, **characterized in that** said bearing collar (12) forms a polygonal head of the washer (19).

4. The tie rod (13) according to claim 2 or 3, **characterized in that** the inner bearing surface (23) of said bearing collar (22) has a zone which is structured so as to increase the coefficient of friction of the contact between said inner bearing surface and the planar surface of the second fastening end (16) of the tie rod (13).

5. The tie rod (13) according to claim 4, **characterized in that** said structured zone is formed by spikes protruding in the axial direction of the washer.

6. The tie rod (13) according to claim 4, **characterized in that** said structured zone is formed by strips arranged radially around the axis of the washer.

7. The tie rod (13) according to claim 2 or 3, **characterized in that** the inner bearing surface (23) of said bearing collar (22) has a coating made of a material of the adhesive type so as to increase the coefficient of friction of the contact between said inner bearing surface and the planar surface of the second fastening end (16) of the tie rod (13).

8. The tie rod (13) according to any one of the preceding claims, **characterized in that** the second circular opening (18) has a diameter greater than the diameter of the first circular opening (17).

9. The tie rod (13) according to any one of the preceding claims, **characterized in that** the off-center orifice (21) has a diameter substantially equal to the diameter of the first circular opening (17).

10. A method for mounting the tie rod (13) according to one of claims 1 to 9 on a structure, **characterized in that** it comprises:

- a step of fastening the first fastening end (15) of the tie rod (13) at a first fastening point of the structure (30), by means of a first fastening screw (32) passing through the first circular opening (17) of the tie rod and a first opening of the structure, which is opposite said first circular opening (17);
- a step of positioning the second fastening end (16) of the tie rod (13) substantially opposite a second opening (33), which is located at a second fastening point of the structure (31), by pivoting the tie rod (13) about the axis of the first fastening screw (32);
- a step of adjusting the position of the off-center orifice (21) of the washer (19), by rotating the washer in the second circular opening (18) and pivoting the tie rod (13) about the axis of the first fastening screw (32), in order to position the off-center orifice (21) facing the second opening (33);
- a step of fastening the second fastening end (16) of the tie rod (13) to said second fastening point of the structure, by means of a second fastening screw (34) passing through the off-center orifice (21) of the washer (19) and said second opening (33).

11. The mounting method according to claim 10, **characterized in that** the second fastening screw (34) is tightened with a tightening torque sufficient to oppose rotation of the washer if the tie rod is subjected to a longitudinal tensile force.

12. The mounting method according to claim 11, **characterized in that**, prior to the tightening, a torque is applied to the washer in order to put a slight tension into the tie rod.

13. A lattice structure (1) having rails (6, 7, 8) extending parallel to one another along a main extension direction, crossbeams (9) distributed along the main extension direction in order to mechanically connect the rails (6, 7, 8) in pairs, and a plurality of tie rods (12) which connect two adjacent rails and two consecutive crossbeams, said lattice structure (1) being **characterized in that** at least one tie rod of the plurality of tie rods is a tie rod (13) according to any one of claims 1 to 9.

14. A solar tracker comprising:

- a mobile device comprising a table equipped with at least one solar energy collection device, a supporting structure extending longitudinally over a length L in order to support said table, a first supporting arch (2) and a second supporting arch (3), which are configured to support said supporting structure;
- a first ground bearing support (4) and a second ground bearing support (5), which are configured respectively to support the first supporting arch (2) and the second supporting arch (3); and
- a kinematic drive device configured to drive the mobile device in rotation relative to the first ground bearing support (4) and the second ground bearing support (5);

the solar tracker being **characterized in that** said supporting structure is a lattice structure (1) according to claim 13.

FIG.1
Art antérieur

FIG.2
Art antérieur

**FIG.3**

**FIG.4**

**FIG.5**

**FIG.6**

**RÉFÉRENCES CITÉES DANS LA DESCRIPTION**

**Documents brevets cités dans la description**

- WO 2018033495 A